(19) Europäisches Patentamt
European Patent Office
Office européen des brevets

(11) **EP 1 930 568 B1**

(12) **EUROPEAN PATENT SPECIFICATION**

(45) Date of publication and mention
of the grant of the patent:
**14.07.2010 Bulletin 2010/28**

(51) Int Cl.:
*F02C 9/00* (2006.01)  *F02C 9/28* (2006.01)
*F02D 41/14* (2006.01)  *F02D 41/18* (2006.01)

(21) Application number: **06405509.8**

(22) Date of filing: **07.12.2006**

(54) **Method and system for monitoring process states of an internal combustion engine**

Verfahren und System zur Überwachung des Betriebsstatus eines Verbrennungsmotors

Procédé et système de surveillance d'états de procédé d'un moteur à combustion interne

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**11.06.2008 Bulletin 2008/24**

(73) Proprietor: **ABB RESEARCH LTD.**
**8050 Zürich (CH)**

(72) Inventors:
• **Stadler, Konrad**
**8166 Niederweningen (CH)**

• **Poncet, Andreas**
**1091 Grandvaux (CH)**
• **Hoff, Thomas von**
**8049 Zürich (CH)**

(74) Representative: **ABB Patent Attorneys**
**C/o ABB Schweiz AG**
**Intellectual Property (CH-LC/IP)**
**Brown Boveri Strasse 6**
**5400 Baden (CH)**

(56) References cited:
**US-A- 3 898 962     US-A- 4 094 142**
**US-A- 4 096 839     US-A- 4 517 948**
**US-A- 4 945 882     US-A- 5 157 613**

**Description**

FIELD OF THE INVENTION

The present invention relates to the field of control and instrumentation technology for internal combustion engines. Specifically, the present invention relates to the field of control and instrumentation technology for rotating machines. More specifically, the invention relates to method and a system for monitoring process states of a rotating machine with a combustion chamber, particularly a turbo machine such as a gas turbine.

BACKGROUND OF THE INVENTION

Internal combustion engines, in particular rotating machines, e.g. turbo machines such as gas turbines, or reciprocating machines, e.g. diesel engines, are subject to considerable loads. Creep and fatigue affect the machines in extreme conditions owing to very high combustion temperatures, pressure ratios, and air flows. As a consequence of their deterioration, the main components of a gas turbine (GT), i.e. the inlet nozzle, the compressor, the combustion chamber, the turbine, the air flow cooler, and the outlet, all contribute - to a different extent - to the degradation of GT performance. The condition of each single component invariably deteriorates with operation time, until it is at least partially restored by some maintenance action.

The goal of gas turbine performance diagnosis is to accurately detect, isolate and assess performance changes, system malfunctions and instrumentation problems. Among a number of other techniques, Gas Path Analysis (GPA), as disclosed for instance in EP-A 1 233 165, is a well established framework for estimating shifts in performance from the knowledge of measured parameters, such as power, engine speeds, temperatures, pressures or fuel flow, taken along the gas path of the turbine. Discernable shifts in these measured parameters provide the required information for determining the underlying shift in engine operation from a presumed reference, nominal or initial state, i.e. the degradation symptoms. GPA allows engine performance deterioration to be identified in terms of a degradation of independent parameters or system states such as thermodynamic efficiencies, flow capacities and inlet/outlet filter areas. In a subsequent diagnosis step, these degradation symptoms are analysed and a maintenance action schedule is deduced, for ensuring economic and safe operation, or a prediction of the remaining life of the major components is made. The origin of a fault affecting a given component of the gas turbine can be of various natures, such as a contamination of compressor blades, erosion of turbine blades or corrosion of machine parts, for example. Conversely, different faults often create similar observable effects or degradation symptoms.

Accordingly, for the operation of a GT, it is important to know exactly the main process states such as temperatures, pressures or fluid mass flow, before and after each component. Specifically, the turbine inlet temperature is constrained to an upper limit, as high temperatures let the turbine blades deteriorate faster than lower temperatures, thereby reducing the life time of the GT. On the other hand, for fuel efficient operation of a GT, high temperatures are required. Therefore, the turbine inlet temperature is controlled tightly. However, in many GT's the turbine inlet temperature is not measured but derived from other measurable states, which produces uncertainty on the controlled variable. Reliable methods to derive turbine inlet temperatures are therefore crucial for operating a GT efficiently. Precise knowledge of these unmeasured states makes it possible to better estimate the operating conditions and, therefore, to better predict maintenance scheduling.

Typically, conventional methods of determining unknown process states use a dynamic or static model. These models are based on thermodynamic and fluid mechanical principles. Model-based techniques make often use of Kalman filter techniques for the online estimation of the unknown states or use iterative methods (e.g. Newton-Raphson), such as described in EP 1 233 165. However, these methods are impacted negatively in that the fluid flowing through the GT influences considerably the unmeasured states, e.g. ambient humidity (in form of vapour) cools the turbine inlet temperature owing to the required vaporization energy. Often this effect is compensated by applying empirical correction curves. This effect is also used to lower the temperature in the combustion chamber in order to reduce $NO_x$ emission when the GT is operated with liquid fuel (oil) instead of gaseous fuel. Generally, the combustion is not modelled and, therefore, the composition of air (influenced by the ambient humidity) and of the exhaust gas (influenced by fuel and air composition) and the corresponding mass flows are not considered.

US Patent No. 4517948 (to Kaji et al.) describes an apparatus for controlling an airfuel ratio in internal combustion engines. The apparatus enables feedback control by determining correction data for various operating states of the engine and then utilising the collection data in correspondence with a given intake air flow.

US Patent No. 4945882 (to Brown et al.) concerns fuel control for an engine using a liquid fuel mixture in a closed loop on a vehicle exhaust mounted oxygen sensor output The apparatus is directed to maintaining a stochiometric air/fuel ratio.

DESCRIPIION OF THE INVENTION

It is therefore an objective of the present invention to provide an improved method and an improved system for monitoring unmeasured process states of an internal combustion engine, in particular of a rotating machine having a combustion chamber, and more particularly, a turbo machine such as a gas turbine It is a particular objective of the present invention, to provide a method and a system for determining more accurately than with conventional methods the turbine inlet temperature of a gas turbine, It is another objective of the present invention, to determine further unmeasured process states such as air mass flow, exhaust gas mass flow and turbine inlet pressure, important for assessing efficiency of the gas turbine.

At least some of these objectives are achieved by a method of and a system for monitoring process states of an internal combustion engine, in particular of a rotating machine, according to claim 1 and claim 7 respectively, as well as by a use of the method according to claim 10. Further preferred embodiments are evident from the dependent claims.

According to the present invention, the above-mentioned objects are particularly achieved in that, for monitoring (unmeasured) process states of a rotating machine having a combustion chamber, measured are compositions of educts entering the combustion chamber. Based on the compositions of the educts, determined is the composition of the product produced by the combustion chamber. Moreover, determined is the mechanical power generated by the rotating machine. Specifically, the mechanical power is determined based on characteristics of a generator driven by the rotating machine and based on the measured power generated by the generator. Based on the mechanical power, the composition of the educts and product, and stoichiometric relationships of educts and product, the value of at least one of the process states is determined and, for example, displayed and/or provided to a control unit controlling the rotating machine.

Thus, based on precise measurements of the educt, e.g. the composition of air and fuel in the combustion process, the product, i.e. the composition of the exhaust gas, is derived, assuming complete combustion, which is very reasonable at least for gaseous fuel. Subsequently, without the need of an iterative or recursive method, making possible a more robust and faster implementation, various unmeasured process states can be determined, e.g. the air mass flow through the compressor leading into the combustion chamber and/or a gas mass flow, a composition and/or a temperature of exhaust gas exiting the combustion chamber. Particularly, in addition to monitoring unmeasured process states, e.g. through implementation on an industrial control system, it is possible to control the turbine inlet temperature based on a more accurate estimate thereof. The proposed method and system are applicable to any rotating machinery where combustion is involved, e.g. a gas turbine, a diesel engine, an internal combustion engine, etc.

For example, for monitoring the process states of a gas turbine, determined is the air mass flow through the compressor leading into the combustion chamber. Based on the air mass flow and the fuel mass flow into the combustion chamber, determined is the gas mass flow of exhaust gas exiting the combustion chamber. Based on the air mass flow and the gas mass flow, determined is the composition of the exhaust gas. Based on the air mass flow, the gas mass flow, and the composition of the exhaust gas, determined is the temperature of the exhaust gas exiting the combustion chamber. The temperature of the exhaust gas exiting the combustion chamber is representative of the inlet temperature of the turbine that is driven by the exhaust gas exiting the combustion chamber.

Preferably, temperatures of educts and product are measured, and, based on their respective temperatures, enthalpies for educts and product are determined using enthalpy functions associated with their respective compositions. In the example of monitoring the process states of the gas turbine, measured are the temperatures of air and fuel entering the combustion chamber, and the temperature of the exhaust gas exiting the turbine. Subsequently, enthalpies for air, fuel and exhaust gas are determined based on their respective temperatures, and the value of the at least one of the process states is based on the enthalpies.

In an embodiment, determined is an inverted enthalpy function associated with the composition of the exhaust gas. Subsequently, the temperature of the exhaust gas exiting the combustion chamber is determined based on the air mass flow and the gas mass flow using the inverted enthalpy function.

BRIEF DESCRIPTION OF THE DRAWINGS

The present invention will be explained in more detail, by way of example, with reference to the drawings in which:

Fig. 1 shows a block diagram illustrating schematically a gas turbine and its main process states,
Fig. 2 shows a block diagram illustrating schematically thermodynamic boundaries of the gas turbine,
Fig. 3 shows an exemplary sequence of steps for monitoring process states of a rotating machine having a combustion chamber,
Fig. 4 depicts compound enthalpies for four distinct gas compositions, and
Fig. 5 depicts how a turbine inlet temperature is determined from an enthalpy line.

## DETAILED DESCRIPTION OF PREFERRED EMBODIMENTS

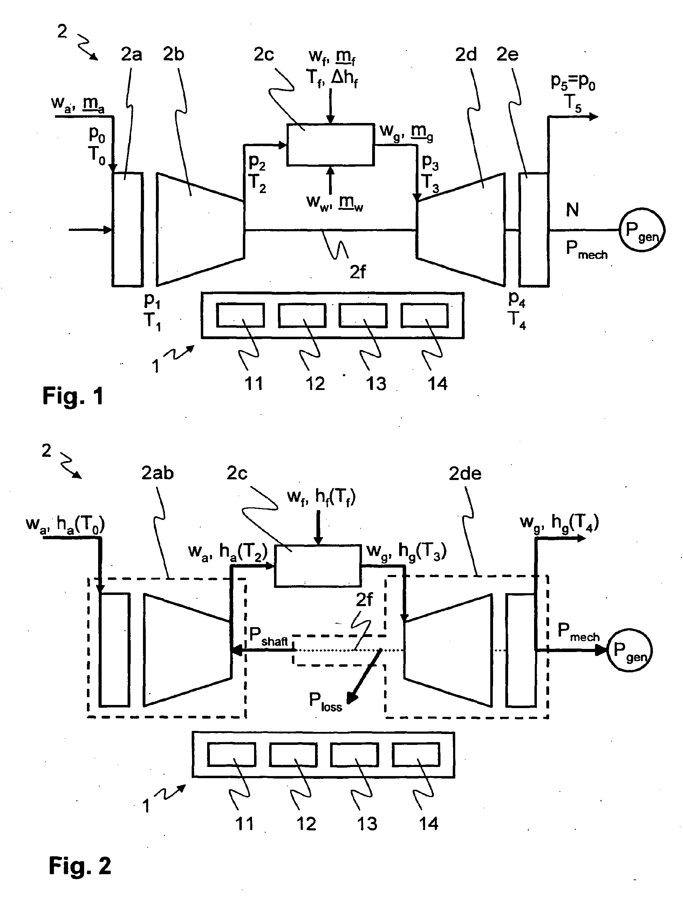

Fig. 1 shows the principal components of a rotating machine 2, particularly a gas turbine, viewed as a system consisting of a sequential arrangement of ideal volume elements in thermodynamic equilibrium, i.e. compressor inlet 2a (filter, nozzle), compressor 2b, combustion chamber 2c, turbine 2d and outlet conduit 2e, wherein compressor 2b and turbine 2d are mechanically interconnected by a shaft 2f. Fig.1 also depicts the places where the various dependent or system output variables, i.e. the process variables such as temperatures, pressures, power and shaft speed, are measured. These variables comprise the temperature $T_0$ at the entry to the compressor inlet 2a, as well as the compressor inlet and outlet temperature and pressure denoted $T_1$, $p_1$ and $T_2$, $p_2$, respectively. Further along the gas path, turbine inlet and outlet temperature and pressure are denoted $T_3$, $p_3$ and $T_4$, $p_4$, respectively, whereas the exhaust gas finally has a variable temperature $T_5$ and a pressure $p_5$ (usually $p_5$ can be assumed to be equal to the ambient pressure $p_0$). In addition, the shaft speed $N$, mechanical power $P_{mech}$ and generator power $P_{gen}$ are typical output variables. In Figs. 1 and 2, indices $a$, $f$, $g$, and $w$ refer to air, fuel, exhaust gas, or water, respectively. Thus reference numerals $w_a$, $w_f$, $w_g$, $w_w$ refer to air mass flow, fuel mass flow, exhaust gas mass flow, or water mass flow, respectively; reference numerals $\underline{m}_a$, $\underline{m}_f$, $\underline{m}_g$, $\underline{m}_w$ refer to the specific compositions of air, fuel, exhaust gas, or water, respectively; and reference numerals $h_a$, $h_f$, $h_g$ refer to the enthalpy at specific temperatures $T_i$ of air, fuel, or exhaust gas, respectively.

Typically, the main unmeasured process states used to monitor and/or control efficient operation include the turbine inlet temperature $T_3$, the air mass flow $w_a$, and the exhaust gas mass flow $w_g$. Often the turbine inlet pressure $p_3$ is also determined. Additionally, the exhaust gas composition may be of interest for regulatory reasons (e.g. $CO_2$ emission). These unmeasured process states are derived from the measurable states, as will be explained in the following paragraphs.

Fig. 2 shows schematically the thermodynamic system boundaries 2ab, 2de of the gas turbine, boundary 2ab encompassing compressor inlet 2a and compressor 2b, and boundary 2de encompassing turbine 2d and outlet conduit 2e.

Generally, the losses can be quantified with sufficient accuracy and are combined and described by one power term $P_{loss}$ which is assumed to be known. The mechanical power $P_{mech}$ generated by the turbine 2d is derived, for example, from the generator characteristics and the measured generator power $P_{gen}$. Using the system boundaries as defined in Fig. 2, the following relations can be derived:

$$P_{mech} = w_g \cdot h_g(T_3) - w_g \cdot h_g(T_4) - P_{shaft} - P_{loss} \tag{1}$$

$$-P_{shaft} = w_a \cdot h_a(T_0) - w_a \cdot h_a(T_2) \tag{2}$$

$$\Downarrow$$

$$P_{mech} = w_g \cdot \left[ h_g(T_3) - h_g(T_4) \right] - w_a \cdot \left[ h_a(T_2) - h_a(T_0) \right] - P_{loss} \tag{3}$$

The enthalpies for air, fuel and exhaust gas, $h_{(\cdot)}(T_{(\cdot)})$, can be derived by considering their specific composition $\underline{m}_{(\cdot)}$ and by using the enthalpy functions $h_{(\cdot)}(T_{(\cdot)})$ published by NASA as polynomials which describe the enthalpy of the main elements. The polynomials are taken from http://cea.grc.nasa.gov/, which is a tool provided by the *NASA Glenn Research Center* under the title "Chemical Equilibrium with Applications". The desired polynomials are generated and downloaded as

$$h_{(\cdot)}(T_{(\cdot)}) = \underline{m}_{(\cdot)}{}^T \cdot \underline{h}(T_{(\cdot)}) \tag{4}$$

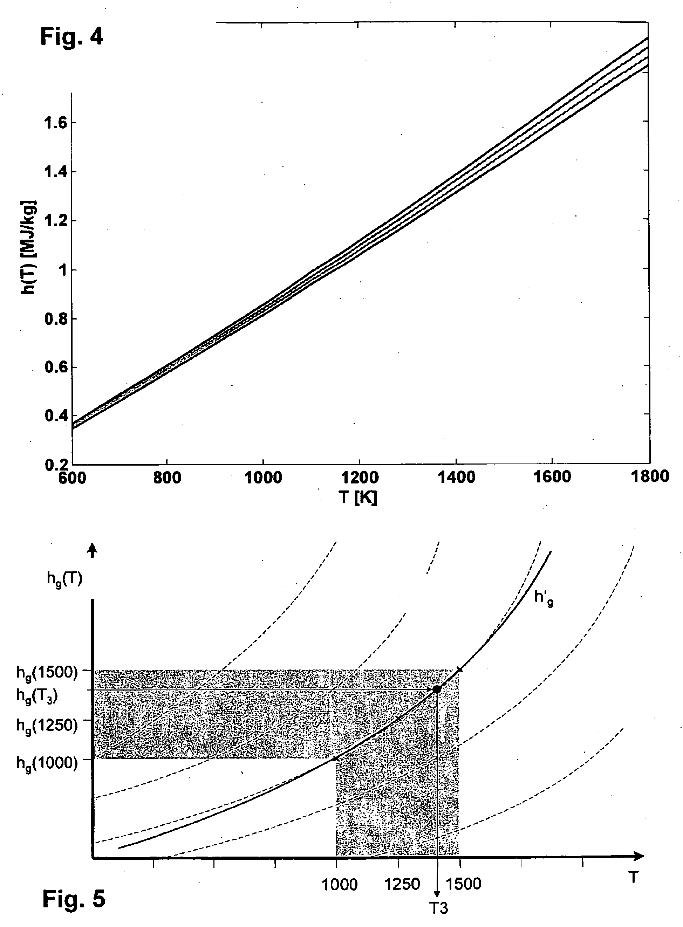

These enthalpy functions are polynomials of higher order and are only temperature dependent. Fig. 4 depicts examples of compound enthalpies $h(T)$ for four distinct gas compositions, as obtained from the NASA site. In equation (3), the terms $w_g \cdot [h_g(T_3) - h_g(T_4)]$ and $w_a$ are unknown, as $w_g$, $T_3$ and $\underline{m}_g$ are unknown. In a first step, $w_a$ is derived. With reference to Fig. 2, the product $w_g h_g(T_3)$ is calculated from the enthalpies that enter the combustion process. Hence,

$$w_g \cdot h_g(T_3) = w_a \cdot h_a(T_2) + w_f \cdot h_f(T_f) + w_f \cdot \Delta h_f . \tag{5}$$

While the GT is operated with gas, the water injection ($w_w$) is neglected in the present example. However, one skilled in the art will understand that the equations can be extended easily to include the water injection. Likewise, pressures and flow speeds are not incorporated, but could be included in a corresponding extension. The term $\Delta h_f$ is the heating value (or heat rate) of the fuel gas and can be calculated from the enthalpy of formation (according to Hess's law) of each gas component ($\underline{\Delta_h}$). Hence,

$$\Delta h_f = \underline{m}_f{}^T \cdot \Delta \underline{h} . \tag{6}$$

The exhaust gas enthalpy flow after the turbine is $w_g h_g(T_4)$. Hence,

$$w_g \cdot h_g(T_4) = w_g \cdot \underline{m}_g{}^T \cdot \underline{h}(T_4) \tag{7}$$

$$w_g \cdot h_g(T_4) = (w_a \cdot \underline{m}_a + w_f \cdot V \cdot \underline{m}_f)^T \cdot \underline{h}(T_4) \tag{8}$$

$$w_g \cdot h_g(T_4) = w_a \cdot \underline{m}_a{}^T \cdot \underline{h}(T_4) + w_f \cdot (V \cdot \underline{m}_f)^T \cdot \underline{h}(T_4) \tag{9}$$

Whereby $V$ is the combustion matrix describing the stoichiometric relation for each component. For example, the complete combustion of Methene and Ethene is covered by the following matrix calculation:

$$\begin{pmatrix} Y_g(O_2) \\ Y_g(CO_2) \\ Y_g(H_2O) \\ Y_g(CH_4) \\ Y_g(C_2H_6) \end{pmatrix} = \underbrace{\begin{pmatrix} 1 & 0 & 0 & -2 & -\frac{5}{2} \\ 0 & 1 & 0 & 1 & 2 \\ 0 & 0 & 1 & 2 & 3 \\ 0 & 0 & 0 & 0 & 0 \\ 0 & 0 & 0 & 0 & 0 \end{pmatrix}}_{V} \cdot \begin{pmatrix} Y_{a+f}(O_2) \\ Y_{a+f}(CO_2) \\ Y_{a+f}(H_2O) \\ Y_{a+f}(CH_4) \\ Y_{a+f}(C_2H_6) \end{pmatrix} \tag{10}$$

$$w_g \cdot \underbrace{\begin{pmatrix} m_{g,O_2} \\ m_{g,CO_2} \\ m_{g,H_2O} \\ m_{g,CH_4} \\ m_{g,C_2H_6} \\ \vdots \end{pmatrix}}_{\underline{m}_g} = w_a \cdot \underbrace{\begin{pmatrix} m_{a,O_2} \\ m_{a,CO_2} \\ m_{a,H_2O} \\ m_{a,CH_4} \\ m_{a,C_2H_6} \\ \vdots \end{pmatrix}}_{\underline{m}_a} + w_f \cdot diag(\underline{M}) \underbrace{\begin{bmatrix} 1 & 0 & 0 & -2 & -5/2 & \cdots \\ 0 & 1 & 0 & 1 & 2 & \cdots \\ 0 & 0 & 1 & 2 & 3 & \cdots \\ 0 & 0 & 0 & 0 & 0 & \cdots \\ 0 & 0 & 0 & 0 & 0 & \cdots \\ \vdots & \vdots & \vdots & \vdots & \vdots & \ddots \end{bmatrix}}_{V} diag^{-1}(\underline{M}) \cdot \underbrace{\begin{pmatrix} m_{f,O_2} \\ m_{f,CO_2} \\ m_{f,H_2O} \\ m_{f,CH_4} \\ m_{f,C_2H_6} \\ \vdots \end{pmatrix}}_{\underline{m}_f} \tag{10'}$$

The vector $\underline{M}$ contains the corresponding molar masses and $diag(\underline{M})$ is a matrix with the elements of $\underline{M}$ on its diagonal. The first row in $V$ can be read as the amount of $O_2$ molecules in the educt minus two times amount of $CH_4$ molecules minus 2.5 times the amount of $C_2H_6$ molecules yields the amount of $O_2$ molecules in the product. Correspondingly, the second row reads as the amount of $CO_2$ in the educt plus once the amount of molecules of $CH_4$ plus twice the amount of molecules of $C_2H_6$ yields the $CO_2$ amount in the product. Hence, equation (3) can be rewritten as

$$P_{mech} + P_{loss} = w_f \cdot h_f(T_f) + w_f \cdot \Delta h_f - w_f \cdot (V \cdot \underline{m}_f)^T \cdot h(T_4)$$
$$\cdots + w_a \cdot h_a(T_0) - w_a \cdot \underline{m}_a^T \cdot \underline{h}(T_4) \tag{11}$$

yielding

$$w_a = \frac{P_{mech} + P_{loss} - w_f \cdot \left(h_f(T_f) + \Delta h_f - (V \cdot \underline{m}_f)^T \cdot h(T_4)\right)}{h_a(T_0) - \underline{m}_a^T \cdot \underline{h}(T_4)} \tag{12}$$

All variables on the right hand side are known. Subsequently, the exhaust gas flow is derived as

$$w_g = w_a + w_f , \tag{13}$$

and the exhaust gas composition $\underline{m}_g$ is derived as

$$\underline{m}_g = V \underbrace{\frac{w_a \underline{m}_a + w_f \underline{m}_f}{w_a + w_f}}_{\approx w_g} , \tag{14}$$

Because the enthalpy functions are monotonic (and therefore invertible), the turbine inlet temperature $T_3$ can be derived easily by inverting the corresponding enthalpy function from equation (5):

$$T_3 = h_g^{-1}\left(\frac{w_a \cdot h_a(T_2) + w_f \cdot h_f(T_f) + w_f \cdot \Delta h_f}{w_a + w_f}\right). \tag{15}$$

The inversion is schematically depicted in Fig. 5, where (due to monotonicity) the temperature $T_3$ is found corresponding to a particular enthalpy. Five distinct enthalpy lines for constant exhaust gas compositions are depicted (broken lines), one of them being approximated by a 2nd order polynominal h'$_g$ in the relevant temperature range between 1000 and 1500 K (shaded area). As the approximation is seen to work reasonably well, in practice, the interpolating low order polynomials are inverted for the purpose of deriving $T_3$.

The method is implemented, for example, on an industrial control system 1 for monitoring the unmeasured process states and/or for controlling the turbine inlet temperature $T_3$. Due to the fact that the combustion is taken into account, $CO_2$ emissions can be derived directly through the calculation. Furthermore, the method can be extended for supervising the quality of fuel input. Properties of specific gas components, such as $CO_2$ or $NO_x$, are often measured in the exhaust gas for regulatory reasons. Having available both, a measurement and an estimation (based on the above determination), provides information on the quality of combustion, quality of fuel input and/or sensor failure, leading to enhanced diagnostics of the combustion system.

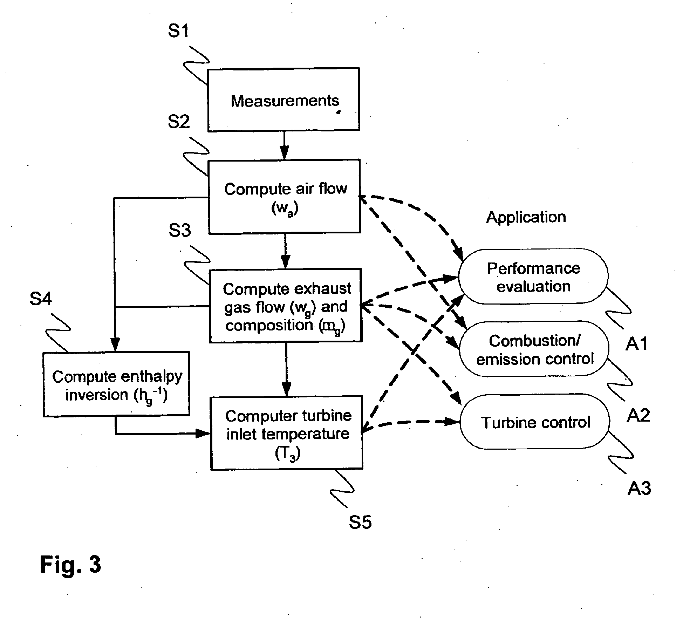

For example, the system 1 comprises a sensor module 11 for receiving measurements of process variables and/or educt composition(s); a data and program memory 12 for storing measurement values, calculation parameters and programmed software modules; a processing unit 13 with at least one processor; and an output module 14 for displaying processing states and/or for proving, to the gas turbine 2 or to a control unit controlling the gas turbine 2, control signals based on the derived processing states. In an embodiment, the program memory 12 comprises a programmed software module for controlling the processing unit such that the method is executed as described in the following paragraphs with reference to Fig. 3.

In step S1, measurements are taken and respective measurement values are received by sensor module 11 and stored in the system 1.

In step S2, the processing unit 13 computes the air mass flow $w_a$ using equation (12), as described above.

In step S3, the processing unit 13 computes the exhaust gas mass flow $w_g$ and exhaust gas composition $\underline{m}_g$ using equations (13) or (14), respectively.

In step S4, the processing unit 13 computes the enthalpy inversion $h_g^{-1}$.

In step S5, the processing unit 13 computes the turbine inlet temperature $T_3$ using equation (15) as described above.

As is also illustrated in Fig. 3, the computer process states, e.g. the air mass flow $w_a$, the exhaust gas mass flow $w_g$, the exhaust gas composition $\underline{m}_g$, and/or the turbine inlet temperature $T_3$, are used by the output module 14 for applications of performance evaluation A1, combustion/emission control A2, and/or turbine control A3.

**Claims**

1. A method of monitoring process states of an internal combustion engine, in particular of a rotating machine (2), the internal combustion engine having a combustion chamber (2c), the method comprising:

   measuring compositions of educts ($\underline{m}_a$, $\underline{m}_f$) entering the combustion chamber (2c);
   determining based on the compositions of the educts ($\underline{m}_a$, $\underline{m}_f$) a composition of a product ($\underline{m}_g$) produced by the combustion chamber (2c);
   determining mechanical power ($P_{mech}$) generated by the rotating machine (2); and
   determining a value of at least one of the process states based on the mechanical power ($P_{mech}$), the composition of the educts ($\underline{m}_a$, $\underline{m}_f$) and product ($\underline{m}_g$), and stoichiometric relationships of educts and product.

2. The method according to claim 1, wherein determining the value of the at least one of the process states includes determining at least one of an air mass flow ($w_a$) through a compressor (2b) leading into the combustion chamber (2c), and a gas mass flow ($w_g$), a composition ($\underline{m}_g$) and a temperature ($T_3$) of exhaust gas exiting the combustion chamber (2c) and/or entering a turbine (2d).

3. The method according to claim 1, further comprising measuring temperatures of educts and product, and determining enthalpies ($h_a$, $h_f$, $h_g$) for educts and product using enthalpy functions associated with their respective compositions ($\underline{m}_a$, $\underline{m}_f$, $m_g$), wherein determining the enthalpies ($h_a$, $h_f$, $h_g$) for educts and product is based on their respective temperature, and wherein determining the value of the at least one of the process states is based on the enthalpies ($h_a$, $h_f$, $h_g$).

4. The method according to claim 1, wherein monitoring the process states includes monitoring the process states of a gas turbine, and wherein determining the value of the at least one of the process states includes determining an air mass flow ($w_a$) through a compressor (2b) leading into the combustion chamber (2c), determining a gas mass flow ($w_g$) of exhaust gas exiting the combustion chamber (2c) based on the air mass flow ($w_a$) and a fuel mass flow ($w_f$) into the combustion chamber (2c), determining a composition of the exhaust gas ($\underline{m}_g$) based on the air mass flow ($w_a$) and the gas mass flow ($w_g$), and determining a temperature ($T_3$) of the exhaust gas exiting the combustion chamber (2c) based on the air mass flow ($w_a$), the gas mass flow ($w_g$), and the composition of the exhaust gas ($\underline{m}_g$), the temperature ($T_3$) of the exhaust gas exiting the combustion chamber (2c) being representative of an inlet temperature of the turbine driven by the exhaust gas exiting the combustion chamber (2c).

5. The method according to claim 4, wherein determining the temperature ($T_3$) of the exhaust gas includes determining an inverted enthalpy function associated with the composition of the exhaust gas ($\underline{m}_g$), and determining the temperature ($T_3$) of the exhaust gas exiting the combustion chamber (2c) is based on the air mass flow ($w_a$) and the gas mass flow ($w_g$) using the inverted enthalpy function.

6. The method according to claim 4, further comprising measuring temperatures ($T_2$, $T_f$) of air and fuel entering the combustion chamber (2c), measuring the temperature ($T_4$) of the exhaust gas exiting the turbine, and determining enthalpies ($h_a$, $h_f$, $h_g$) for air, fuel and exhaust gas based on their respective temperatures, and wherein determining the value of the at least one of the process states is based on the enthalpies ($h_a$, $h_f$, $h_g$).

7. A system (1) for monitoring process states of an internal combustion engine, in particular of a rotating machine (2), the internal combustion engine having a combustion chamber (2c), the system (1) comprising:

sensors (11) measuring compositions of educts ($\underline{m}_a$, $\underline{m}_f$) entering the combustion chamber (2c);
a processing unit (13) computing a composition of a product ($\underline{m}_g$) produced by the combustion chamber (2c), based on the compositions of the educts ($\underline{m}_a$, $m_f$);
computing the mechanical power ($P_{mech}$) generated by the rotating machine (2); and
computing a value of at least one of the process states based on the mechanical power ($P_{mech}$), the composition of the educts ($\underline{m}_a$, $\underline{m}_f$) and product ($\underline{m}_g$), and stoichiometric relationships of educts and product.

8. The system (1) according to claim 7, wherein the rotating machine (2) is a gas turbine wherein the process states include at least one of an air mass flow ($w_a$) through a compressor (2b) leading into the combustion chamber (2c), and a gas mass flow ($w_g$), a composition ($\underline{m}_g$) and a temperature ($T_3$) of exhaust gas exiting the combustion chamber (2c), and wherein the means for determining the value of the at least one of the process states are further configured to determine an air mass flow ($w_a$) through a compressor (2b) leading into the combustion chamber (2c), to determine a gas mass flow ($w_g$) of exhaust gas exiting the combustion chamber (2c) based on the air mass flow ($w_a$) and a fuel mass flow ($w_f$) into the combustion chamber (2c), to determine a composition of the exhaust gas ($m_g$) based on the air mass flow ($w_g$) and the gas mass flow ($w_g$), and to determine a temperature ($T_3$) of the exhaust gas exiting the combustion chamber (2c) based on the air mass flow ($w_a$), the gas mass flow ($w_g$), and the composition of the exhaust gas ($\underline{m}_g$), the temperature ($T_3$) of the exhaust gas exiting the combustion chamber (2c) being representative of an inlet temperature of the turbine driven by the exhaust gas exiting the combustion chamber (2c).

9. The system (1) according to claim 8, further comprising means for measuring temperature ($T_2$, $I_f$) of air and fuel entering the combustion chamber (2c), means for measuring the temperature ($T_4$) of the exhaust gas exiting the turbine, and means for determining enthalpies ($h_a$, $h_f$, $h_g$) for air, fuel and exhaust gas based on their respective temperatures, and wherein the means for determining the value of the at least one of the process states are configured to determine the value of the at least one of the process states based on the enthalpies ($h_a$, $h_f$, $h_g$).

10. A use of a method of monitoring process states as claimed in one of claims 1 to 6 for the purpose of diagnosing the internal combustion system, comprising;
measuring, by means of sensors, compositions of educts ($m_a$, $m_f$) entering the combustion chamber (2c),
determining a composition of a product ($\underline{m}_g$) produced by the combustion chamber(2c), based on the compositions of the educts ($\underline{m}_g$, $m_f$),
deriving, from the determined composition, information on a quality of combustion or a quality of fuel input, or information about sensor failure.

**Patentansprüche**

1. Verfahren zur Überwachung von Prozeßzuständen eines Verbrennungsmotors, insbesondere einer sich drehenden Maschine (2), wobei der Verbrennungsmotor eine Verbrennungskammer (2c) aufweist, wobei das Verfahren folgendes umfaßt:

   Messen von Zusammensetzungen von Edukten ($\underline{m}_a$, $\underline{m}_f$), die in die Verbrennungskammer (2c) eintreten;
   Bestimmen einer Zusammensetzung eines von der Verbrennungskammer (2c) produzierten Produkts ($\underline{m}_g$) auf der Basis der Zusammensetzungen der Edukte ($\underline{m}_a$, $\underline{m}_f$) ;
   Bestimmen einer mechanischen Leistung ($P_{mech}$), die von der sich drehenden Maschine (2) generiert wird; und
   Bestimmen eines Werts von mindestens einem der Prozeßzustände auf der Basis der mechanischen Leistung ($P_{mech}$), der Zusammensetzung der Edukte ($\underline{m}_a$, $\underline{m}_f$) und des Produkts ($\underline{m}_g$) und stöchiometrischer Beziehungen von Edukten und Produkt.

2. Verfahren nach Anspruch 1, wobei das Bestimmen des Werts des mindestens einen der Prozeßzustände das Bestimmen eines Luftmassenflusses ($w_a$) durch einen in die Verbrennungskammer (2c) führenden Kompressor (2b) und/oder eines Gasmassenflusses ($w_g$), einer Zusammensetzung ($\underline{m}_g$) und/oder einer Temperatur ($T_3$) von Abgas, das aus der Verbrennungskammer (2c) austritt und/oder in eine Turbine (2d) eintritt, beinhaltet.

3. Verfahren nach Anspruch 1, weiterhin umfassend das Messen von Temperaturen von Edukten und Produkt und Bestimmen von Enthalpien ($h_a$, $h_f$, $h_g$) für Edukte und Produkt unter Verwendung von mit ihren jeweiligen Zusammensetzungen (($\underline{m}_a$, $\underline{m}_f$, $\underline{m}_g$) assoziierten Enthalpiefunktionen, wobei das Bestimmen der Enthalpien ($h_a$, $h_f$, $h_g$) für Edukte und Produkt auf ihren jeweiligen Temperaturen basiert und wobei das Bestimmen des Werts des mindestens einen der Prozeßzustände auf den Enthalpien ($h_a$, $h_f$, $h_g$) basiert.

**4.** Verfahren nach Anspruch 1, wobei das Überwachen der Prozeßzustände das Überwachen der Prozeßzustände einer Gasturbine beinhaltet und wobei das Bestimmen des Werts des mindestens einen der Prozeßzustände das Bestimmen eines Luftmassenflusses ($w_a$) durch einen in die Verbrennungskammer (2c) führenden Kompressor (2b), das Bestimmen eines Gasmassenflusses ($w_g$) von aus der Verbrennungskammer (2c) austretendem Abgas auf der Basis des Luftmassenflusses ($w_a$) und eines Brennstoffmassenflusses ($w_f$) in die Verbrennungskammer (2c), das Bestimmen einer Zusammensetzung des Abgases ($\underline{m}_g$) auf der Basis des Luftmassenflusses ($w_a$) und des Gasmassenflusses ($w_g$) und das Bestimmen einer Temperatur ($T_3$) des aus der Verbrennungskammer (2c) austretenden Abgases auf der Basis des Luftmassenflusses ($w_a$), des Gasmassenflusses ($w_g$) und der Zusammensetzung des Abgases ($\underline{m}_g$) beinhaltet, wobei die Temperatur ($T_3$) des aus der Verbrennungskammer (2c) austretenden Abgases repräsentativ ist für eine Einlaßtemperatur der Turbine, die von dem aus der Verbrennungskammer (2c) austretenden Abgas angetrieben wird.

**5.** Verfahren nach Anspruch 4, wobei das Bestimmen der Temperatur ($T_3$) des Abgases das Bestimmen einer mit der Zusammensetzung des Abgases ($\underline{m}_g$) assoziierten invertierten Enthalpiefunktion beinhaltet und das Bestimmen der Temperatur ($T_3$) des aus der Verbrennungskammer (2c) austretenden Abgases auf dem Luftmassenfluß ($w_a$) und dem Gasmassenfluß ($w_g$) basiert unter Verwendung der invertierten Enthalpiefunktion.

**6.** Verfahren nach Anspruch 4, weiterhin umfassend das Messen von Temperaturen ($T_2$, $T_f$) von Luft und Brennstoff, die in die Verbrennungskammer (2c) eintreten, das Messen der Temperatur ($T_4$) des aus der Turbine austretenden Abgases und das Bestimmen von Enthalpien ($h_a$, $h_f$, $h_g$) für Luft, Brennstoff und Abgas auf der Basis ihrer jeweiligen Temperaturen und wobei das Bestimmen des Werts des mindestens einen der Prozeßzustände auf den Enthalpien ($h_a$, $h_f$, $h_g$) basiert.

**7.** System (1) zur Überwachung von Prozeßzuständen eines Verbrennungsmotors, insbesondere einer sich drehenden Maschine (2), wobei der Verbrennungsmotor eine Verbrennungskammer (2c) aufweist, wobei das System (1) folgendes umfaßt:

Sensoren (11), die Zusammensetzungen von in die Verbrennungskammer (2c) eintretenden Edukten ($\underline{m}_a$, $\underline{m}_f$) messen;
eine Verarbeitungseinheit (13), die eine Zusammensetzung eines von der Verbrennungskammer (2c) produzierten Produkts ($\underline{m}_g$) auf der Basis der Zusammensetzungen der Edukte ($\underline{m}_a$, $\underline{m}_f$) berechnet;
Berechnen der von der sich drehenden Maschine (2) generierten mechanischen Leistung ($P_{mech}$) und Berechnen eines Werts von mindestens einem der Prozeßzustände auf der Basis der mechanischen Leistung ($P_{mech}$), der Zusammensetzung der Edukte ($\underline{m}_a$, $\underline{m}_f$) und des Produkts ($\underline{m}_g$) und von stöchiometrischen Beziehungen von Edukten und Produkt.

**8.** System (1) nach Anspruch 7, wobei die sich drehende Maschine (2) eine Gasturbine ist, wobei die Prozeßzustände einen Luftmassenfluß ($w_a$) durch einen in die Verbrennungskammer (2c) führenden Kompressor (2b) und/oder einen Gasmassenfluß ($w_g$), eine Zusammensetzung ($\underline{m}_g$) und/oder eine Temperatur ($T_3$) von aus der Verbrennungskammer (2c) austretendem Abgas beinhalten und wobei die Mittel zum Bestimmen des Werts des mindestens einen der Prozeßzustände weiterhin konfiguriert sind, einen Luftmassenfluß ($w_a$) durch einen in die Verbrennungskammer (2c) führenden Prozessor (2b) zu bestimmen, einen Gasmassenfluß ($w_g$) von aus der Verbrennungskammer (2c) austretendem Abgas auf der Basis des Luftmassenflusses ($w_a$) und eines Brennstoffmassenflusses ($w_f$) in die Verbrennungskammer (2c) zu bestimmen, eine Zusammensetzung des Abgases ($\underline{m}_g$) auf der Basis des Luftmassenflusses ($w_a$) und des Gasmassenflusses ($w_g$) zu bestimmen und eine Temperatur ($T_3$) des aus der Verbrennungskammer (2c) austretenden Abgases auf der Basis des Luftmassenflusses ($w_a$), des Gasmassenflusses ($w_g$) und der Zusammensetzung des Abgases ($\underline{m}_g$) zu bestimmen, wobei die Temperatur ($T_3$) des aus der Verbrennungskammer (2c) austretenden Abgases repräsentativ ist für eine Einlaßtemperatur der Turbine, die von dem aus der Verbrennungskammer (2c) austretenden Abgas angetrieben wird.

**9.** System (1) nach Anspruch 8, weiterhin umfassend Mittel zum Messen von Temperaturen ($T_2$, $T_f$) von Luft und Brennstoff, die in die Verbrennungskammer (2c) eintreten, Mittel zum Messen der Temperatur ($T_4$) des aus der Turbine austretenden Abgases und Mittel zum Bestimmen von Enthalpien ($h_a$, $h_f$, $h_g$) für Luft, Brennstoff und Abgas auf der Basis ihrer jeweiligen Temperaturen und wobei die Mittel zum Bestimmen des Werts des mindestens einen der Prozeßzustände konfiguriert sind, den Wert des mindestens einen der Prozeßzustände auf der Basis der Enthalpien ($h_a$, $h_f$, $h_g$) zu bestimmen.

**10.** Verwendung eines Verfahrens zur Überwachung von Prozeßzuständen nach einem der Ansprüche 1 bis 6 für den

**EP 1 930 568 B1**

Zweck des Diagnostizierens des Verbrennungssystems, umfassend:

Messen von Zusammensetzungen von in die Verbrennungskammer (2c) eintretenden Edukten ($\underline{m}_a$, $\underline{m}_f$) mit Hilfe von Sensoren,
Bestimmen einer Zusammensetzung eines von der Verbrennungskammer (2c) produzierten Produkts ($\underline{m}_g$) auf der Basis der Zusammensetzungen der Edukte ($\underline{m}_a$, $\underline{m}_f$),
Ableiten von Informationen über eine Qualität einer Verbrennung oder eine Qualität einer Brennstoffeingabe oder Informationen über einen Sensorausfall anhand der bestimmten Zusammensetzung.

**Revendications**

1. Procédé de suivi des états d'un processus d'un moteur à combustion interne, notamment d'une machine tournante (2), le moteur à combustion interne ayant une chambre de combustion (2c), le procédé consistant à :

mesurer des compositions de composants ($\underline{m}_a$, $\underline{m}_f$) pénétrant dans la chambre de combustion (2c) ;
déterminer, sur la base des compositions des composants ($\underline{m}_a$, $\underline{m}_f$) , une composition d'un produit ($\underline{m}_g$) produit par la chambre de combustion (2c) ;
déterminer la puissance mécanique ($P_{mech}$) produite par la machine tournante (2) ; et
déterminer une valeur d'au moins l'un des états du processus sur la base de la puissance mécanique ($P_{mech}$), de la composition des composants ($\underline{m}_a$, $\underline{m}_f$) et du produit ($\underline{m}_g$), et des relations stoechiométriques des composants et du produit.

2. Procédé selon la revendication 1, dans lequel la détermination de la valeur de l'au moins un des états du processus consiste à déterminer au moins l'un d'un débit massique d'air ($w_a$) à travers un compresseur (2b) conduisant à la chambre de combustion (2c), et d'un débit massique de gaz ($w_g$), d'une composition ($\underline{m}_g$) et d'une température ($T_3$) du gaz d'échappement sortant de la chambre de combustion (2c) et/ou pénétrant dans une turbine (2d).

3. Procédé selon la revendication 1, consistant en outre à mesurer les températures des composants et du produit, et à déterminer des enthalpies ($h_a$, $h_f$, $h_g$) pour les composants et le produit en utilisant des fonctions d'enthalpie associées à leurs compositions respectives ($\underline{m}_a$, $\underline{m}_f$, $\underline{m}_g$) , la détermination des enthalpies ($h_a$, $h_f$, $h_g$) pour les composants et pour le produit étant basée sur leurs températures respectives, et la détermination de la valeur de l'au moins un des états du processus étant basée sur les enthalpies ($h_a$, $h_f$, $h_g$).

4. Procédé selon la revendication 1, dans lequel le suivi des états du processus consiste à suivre les états du processus d'une turbine à gaz, et dans lequel la détermination de la valeur de l'au moins un des états du processus consiste à déterminer un débit massique d'air ($w_a$) à travers un compresseur (2b) conduisant à la chambre de combustion (2c), à déterminer un débit massique de gaz ($w_g$) d'un gaz d'échappement sortant de la chambre de combustion (2c) sur la base du débit massique d'air ($w_a$) et d'un débit massique de carburant ($w_f$) pénétrant dans la chambre de combustion (2c), à déterminer une composition du gaz d'échappement ($m_g$) sur la base du débit massique d'air ($w_a$) et du débit massique de gaz ($w_g$), et à déterminer une température ($T_3$) du gaz d'échappement sortant de la chambre de combustion (2c) sur la base du débit massique d'air ($w_a$), du débit massique de gaz ($w_g$) et de la composition du gaz d'échappement ($\underline{m}_g$), la température ($T_3$) du gaz d'échappement sortant de la chambre de combustion (2c) étant représentative d'une température d'entrée de la turbine entraînée par le gaz d'échappement sortant de la chambre de combustion (2c).

5. Procédé selon la revendication 4, dans lequel la détermination de la température ($T_3$) du gaz d'échappement consiste à déterminer une fonction d'enthalpie inversée associée à la composition du gaz d'échappement ($\underline{m}_g$), et la détermination de la température ($T_3$) du gaz d'échappement sortant de la chambre de combustion (2c) se fait sur la base du débit massique d'air ($w_a$) et du débit massique de gaz ($w_g$) en utilisant la fonction d'enthalpie inversée.

6. Procédé selon la revendication 4, consistant en outre à mesurer des températures ($T_2$, $T_f$) de l'air et du carburant pénétrant dans la chambre à combustion (2c), à mesurer la température ($T_4$) du gaz d'échappement sortant de la turbine, et à déterminer des enthalpies ($h_a$, $h_f$, $h_g$) pour l'air, le carburant et le gaz d'échappement sur la base de leurs températures respectives, et dans lequel la détermination de la valeur de l'au moins un des états du processus est basée sur les enthalpies ($h_a$, $h_f$, $h_g$).

7. Système (1) de suivi des états d'un processus d'un moteur à combustion interne, notamment d'une machine tournante (2), le moteur à combustion interne ayant une chambre de combustion (2c), le système (1) comprenant :

des capteurs (11) mesurant des compositions de composants ($\underline{m}_a$, $\underline{m}_f$) pénétrant dans la chambre de combustion (2c) ;
une unité de traitement (13) calculant une composition d'un produit ($\underline{m}_g$) produit par la chambre de combustion (2c), sur la base des compositions des composants ($\underline{m}_a$, $\underline{m}_f$) ;
calculant la puissance mécanique ($P_{mech}$) produite par la machine tournante (2) ; et
calculant une valeur d'au moins l'un des états du processus sur la base de la puissance mécanique ($P_{mech}$), de la composition des composants ($\underline{m}_a$, $\underline{m}_f$) et du produit ($\underline{m}_g$), et des relations stoechiométriques des composants et du produit.

8.  Système (1) selon la revendication 7, dans lequel la machine tournante (2) est une turbine à gaz, dans lequel les états du processus comprennent au moins l'un d'un débit massique d'air ($w_a$) à travers un compresseur (2b) conduisant à la chambre de combustion (2c), et d'un débit massique de gaz ($w_g$), d'une composition ($\underline{m}_g$) et d'une température ($T_3$) d'un gaz d'échappement sortant de la chambre de combustion (2c), et dans lequel les moyens destinés à déterminer la valeur de l'au moins un des états du processus sont en outre configurés pour déterminer un débit massique d'air ($w_a$) à travers un compresseur (2b) conduisant à la chambre de combustion (2c), pour déterminer un débit massique de gaz ($w_g$) du gaz d'échappement sortant de la chambre de combustion (2c) sur la base du débit massique d'air ($w_a$) et d'un débit massique de carburant ($w_f$) pénétrant dans la chambre de combustion (2c), pour déterminer une composition du gaz d'échappement ($\underline{m}_g$) sur la base du débit massique d'air ($w_a$) et du débit massique de gaz ($w_g$), et pour déterminer une température ($T_3$) du gaz d'échappement sortant de la chambre de combustion (2c) sur la base du débit massique d'air ($w_a$), du débit massique de gaz ($w_g$) et de la composition du gaz d'échappement ($\underline{m}_g$), la température ($T_3$) du gaz d'échappement sortant de la chambre de combustion (2c) étant représentative de la température d'entrée de la turbine entraînée par le gaz d'échappement sortant de la chambre de combustion (2c).

9.  Système (1) selon la revendication 8, comprenant en outre des moyens destinés à mesurer des températures ($T_2$, $T_f$) de l'air et du carburant pénétrant dans la chambre de combustion (2c), des moyens destinés à mesurer la température ($T_4$) du gaz d'échappement sortant de la turbine, et des moyens destinés à déterminer des enthalpies ($h_a$, $h_f$, $h_g$) pour l'air, le carburant et le gaz d'échappement sur la base de leurs températures respectives, et dans lequel les moyens destinés à déterminer la valeur de l'au moins un des états du processus sont configurés pour déterminer la valeur de l'au moins un des états du processus sur la base des enthalpies ($h_a$, $h_f$, $h_g$).

10. Utilisation d'un procédé de suivi des états d'un processus selon l'une des revendications 1 à 6 dans le but de diagnostiquer le système de combustion interne, consistant à :

mesurer, au moyen de capteurs, les compositions de composants ($\underline{m}_a$, $\underline{m}_f$) pénétrant dans la chambre de combustion (2c),
déterminer une composition d'un produit ($\underline{m}_g$) produit par la chambre de combustion (2c) sur la base des compositions des composants ($\underline{m}_a$, $\underline{m}_f$) ,
déduire de la composition déterminée des informations concernant la qualité de la combustion ou la qualité du carburant introduit, ou des informations concernant une panne de capteur.

**Fig. 1**

**Fig. 2**

S1

```
      ┌──────────────────────┐
      │    Measurements      │
      └──────────┬───────────┘
                 │
                 ▼
S2    ┌──────────────────────┐
      │  Compute air flow    │
      │       (wₐ)           │
      └──────────┬───────────┘
                 │
                 ▼
S3    ┌──────────────────────┐
      │  Compute exhaust     │
      │  gas flow (w_g) and  │
      │  composition (m_g)   │
      └──────────┬───────────┘
                 │
S4    ┌──────────────────────┐
      │ Compute enthalpy     │
      │ inversion (h_g⁻¹)    │
      └──────────────────────┘
                 ▼
      ┌──────────────────────┐
      │ Computer turbine     │
      │ inlet temperature    │
      │       (T₃)           │
      └──────────────────────┘
```

Application

Performance evaluation      A1

Combustion/ emission control   A2

Turbine control   A3

S5

# Fig. 3

13

**Fig. 4**

**Fig. 5**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1233165 A
- US 4517948 A
- US 4945882 A